# FASCICULE DE BREVET EUROPEEN

(11) **EP 0 481 918 B1**
(45) Date de publication et mention de la délivrance du brevet: **19.04.1995**
(21) Numéro de dépôt: 91810767.3
(22) Date de dépôt: 30.09.1991
(51) Int. Cl.: G01B 5/26, G01B 9/02

(54) **Dispositif optique à interférométrie en lumière blanche**
Optisches Gerät für Weisslichtinterferometrie
Optical device for white light interferometry

(30) Priorité: 16.10.1990 CH 3308/90
(43) Date de publication de la demande: 22.04.1992
(73) Titulaire: CENTRE SUISSE D'ELECTRONIQUE ET DE MICROTECHNIQUE S.A., 2007 Neuchâtel (CH)
(72) Inventeur: Falco, Lucien, CH-2088 Cressier (CH); Voirin, Guy, CH-2000 Neuchâtel (CH); Parriaux, Olivier, CH-1005 Lausanne (CH)
(74) Mandataire: Brulliard, Joel

(56) Documents cités:
- DE-A- 3 232 429
- Conference Proceedings OFS 84, 2nd International Conference on Optical Fiber Sensors, Stuttgart, DE, 5-7 septembre 1984, p. 361-364, Th. Bosselman et al.:"High-accuracy position-sensing with fiber-coupled white-light interferometers"
- JOURNAL OF PHYSICS E. SCIENTIFIC INSTRUMENTS, vol. 21, no. 2, février 1988, Ishing, Bristol, GB, pages 187-192; D. HICKMAN: "An optical sensor based on temporal coherence properties"
- ELECTRONICS LETTERS, vol. 26, no. 7, mars 1990, Enage, GB, pages 452-453; T.A. BERKOFF ET AL.: "Interferometric fibre displacement/strain sensor based on source coherence synthesis"

## Description

La présente invention se rapporte aux dispositifs utilisant des moyens de mesure optiques, en général , et concerne, plus particulièrement, un dispositif optique à interférométrie en lumière blanche.

Les premières sources de lumière utilisées en interférométrie étaient des sources de lumière dite "blanche", caractérisées par une grande largeur spectrale et émettant des trains d'ondes de faible longueur de cohérence.

L'apparition de sources laser, de grande longueur de cohérence, n'a pas signifié l'abandon de l'interférométrie en lumière blanche en métrologie de chemin optique (mesure de position et/ou d'indice de réfraction).

Alors que l'interférométrie en lumière cohérente permet une mesure de type incrémental, ou relative, délivrant des valeurs continues, l'interférométrie en lumière blanche permet une mesure absolue délivrant des valeurs discrètes.

Un inconvénient majeur de l'interférométrie est la difficulté de permettre une mesure absolue délivrant des valeurs continues.

L'article "High-accuracy position-sensing with fiber-coupled white-light interferometers," de Th. Bosselmann et R. Ulrich, 2^{nd} Int. Conf. on Optical Sensor, OFS'84, Stuttgart, sept. 1984, explique en quoi un système interférométrique en lumière blanche implique une limitation du fait que le signal optique de sortie est périodique. Une solution connue réside dans l'utilisation d'une source de lumière modulée et d'une détection en quadrature, cependant les auteurs notent que l'absence d'un zéro optique fixe, c'est-à-dire d'une position de référence, procure un désavantage. Les auteurs décrivent un système optique interférométrique utilisant une source à large bande, un premier et un second interféromètres conformes au brevet de R. E. Epworth repris ci-dessous.

Le brevet US 4,533,247 de Richard E. Epworth concerne un système optique de transmission utilisant des moyens optiques de mesure interférométrique.

Le brevet Epworth montre la mise en série d'un premier et d'un second interféromètre du type Michelson, Mach-Zehnder ou Fabry-Perot. Ledit premier interféromètre est appelé interféromètre de transduction et ledit second interféromètre est appelé interféromètre de mesure. Les deux ondes dans les deux branches de l'interféromètre de mesure interfèrent si la différence de chemin optique dans ledit interféromètre est égale à la différence de chemin optique entre les deux bras de l'interféromètre de transduction.

Le dispositif optique interférométrique de Epworth nécessite l'utilisation de moyens pour démoduler le signal optique modulé par l'interféromètre de transduction. Ledit moyen de démodulation, disposé à l'extérieur dudit premier interféromètre, reçoit ledit signal optique modulé et doit être en mesure de délivrer un signal optique démodulé.

L'inconvénient majeur du dispositif de Epworth est qu'il nécessite la reproduction, dans le second interféromètre, de l'effet de transduction à l'origine de la modulation dans le premier interféromètre. Cet effet de transduction, à savoir une force, une pression ou encore une variation de température, se traduit par une modification des paramètres opto-géométriques, en l'occurence variation du chemin optique de la branche de transduction, dudit interféromètre.

Les limitations majeures d'un tel dispositif résident dans la nécessité, d'une part, de reproduire et, d'autre part, de mesurer, de facon précise, l'effet de transduction dans le second interféromètre.

Aussi un but de la présente invention est-il un dispositif optique à interférométrie en lumière blanche ne présentant pas les inconvénients et limitations cités précédemment.

Un autre but est un dispositif optique à interférométrie en lumière blanche délivrant au moins un signal de référence utilisée comme origine.

Les caractéristiques de l'invention sont définies dans les revendications.

Des avantages de l'invention vis-à-vis de l'art antérieur sont que:
- la précision de chaque position de référence est celle d'un système interférométrique incrémental,
- les positions de référence sont indépendantes de l'indice de réfraction de l'air, l'interférence ne se faisant qu'en condition balancée et étant placée sur le maximum maximorum de l'interférogramme et
- les sources de lumière pouvant être utilisées sont de bas coût et de grande durée de vie.

D'autres buts, caractéristiques et avantages de la présente invention apparaîtront plus clairement à la lecture de la description suivante d'exemples de configurations du dispositif optique à interférométrie en lumière blanche, ladite description étant faite à titre purement illustratif et en relation avec les dessins joints dans lesquels:
- La fig. 1: montre une première configuration du dispositif optique à interférométrie en lumière blanche.
- La fig. 2: montre une deuxième configuration du dispositif optique à interférométrie en lumière blanche.
- La fig. 3: montre un premier exemple de réalisatlon du dispositif interférométrique selon la première configuration.
- La fig. 4: montre un second exemple de réalisatlon en optique intégrée du dispositif interférométrique selon la première configuration.

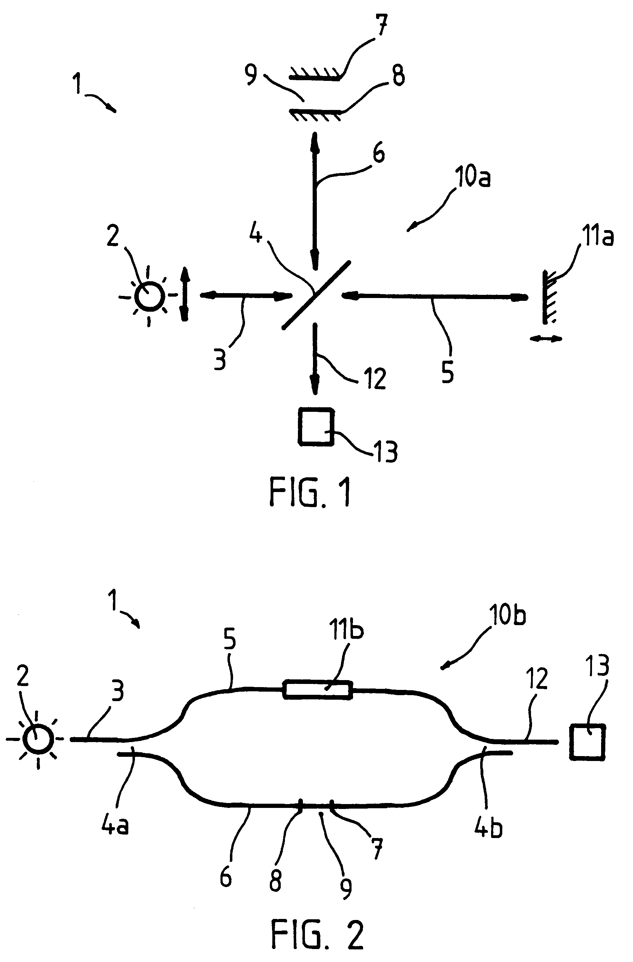

Le dispositif optique à interférométrie en lumière blanche selon l'invention est représenté aux figures 1 et 2 selon deux configurations possibles. Tout au long de la description, les éléments analogues portent les mêmes références.

La fig. 1 montre une première configuration du dispositif optique interférométrique combinant un premier et un second interféromètre du type Michelson et Fabry-Perot respectivement. Le dispositif optique interférométrique 1 comporte une source de lumière 2 de largeur spectrale Δλ; un premier interféromètre optique 10a du type Michelson, lequel se compose d'une branche d'amenée 3, d'une branche de transmission 5 comportant un miroir mobile 11a, d'une branche de référence 6 comportant un miroir fixe 7 et d'une branche de sortie 12; un second interféromètre optique 9 à ondes multiples du type Fabry-Perot, lequel se compose dudit miroir fixe 7 et d'un second miroir optique 8 également fixe, disposé dans ladite branche de référence dudit premier interféromètre; et des moyens de détection 13 disposés dans ladite branche de sortie du dispositif interférométrique.

La fig. 2 montre une deuxième configuration du dispositif optique interférométrique combinant un premier et un second interféromètres du type Mach-Zehnder et Fabry-Perot respectivement. Le dispositif optique interférométrique 1 comporte une source de lumière 2 de largeur spectrale Δλ; un premier interféromètre optique 10b du type Mach-Zehnder, lequel se compose d'une branche d'amenée 3, d'une branche de transmission 5 comportant un milieu 11b aux paramètres opto-géométriques variables, d'une branche de référence 6 et d'une branche de sortie 12; un second interféromètre optique 9 à ondes multiples du type Fabry-Perot, lequel se compose d'un premier 7 et d'un second 8 miroirs optiques fixes, disposés dans ladite branche de référence dudit premier interféromètre; et des moyens de détection 13 disposés dans ladite branche de sortie du dispositif interférométrique.

Dans l'une ou l'autre configuration, l'onde lumineuse émise par la source à large bande spectrale est injectée dans le premier interféromètre. Ladite onde lumineuse injectée est divisée en amplitude, par un premier séparateur d'ondes 4,4a, pour faire apparaître une onde de référence et une onde transmise se propageant dans la branche de référence et la branche de transmission respectivement.

Ladite onde de référence subit N réflexions successives entre les miroirs fixes 7,8 du second interféromètre et se décompose ainsi en N+1 ondes de référence. La première des N+1 ondes de référence est celle n'ayant subit aucune réflexion à l'intérieur de la cavité optique du second interféromètre. La dernière des N+1 ondes de référence étant celle ayant subi N allers et retours dans ladite cavité optique. Les chemins optiques parcourus par les N+1 ondes de référence diffèrent les une des autres d'un nombre entier de fois la quantité 2nL, n étant l'indice de réfraction dans la cavité optique et L la distance entre les miroirs fixes la constituant.

Ladite onde transmise se propage dans la branche de transmission du premier interféromètre dont les paramètres opto-géométriques sont susceptibles d'être modifiés sous l'action d'une grandeur physique ou chimique. Le chemin optique parcouru par l'onde transmise qui est dépendant de ces paramètres opto-géométriques varie en fonction de leurs modifications.

L'onde de référence et l'onde transmise sont recombinées, par un second séparateur d'ondes 4,4b, en sortie du premier interféromètre optique et sont alors susceptible d'interférer entre elles.

Lesdites interférences se produisent lorsque ces deux ondes parcourent des chemins optiques identiques. En d'autres termes, il existe une suite de modifications opto-géométriques, subies par la branche de transmission du premier interféromètre, pour lesquelles l'onde de référence et l'onde transmise interfèrent, c'est-à-dire pour lesquelles il y a identité des chemins optiques. Cette suite est une suite finie de valeurs discrètes de modifications opto-géométriques du fait que les N+1 ondes de référence définissent un ensemble fini de valeurs discrètes du chemin optique de la branche de référence.

La cavité optique du second interféromètre définit autant de points d'identité de chemins optiques qu'il y a d'allers et retours dans ladite cavité optique plus une. Ce nombre de points est limité par la distance entre les deux miroirs constituant la cavité Fabry-Perot: plus cette distance est grande et plus la longueur de cohérence de la source est faible, plus est grand le nombre de points pouvant être définis. En effet, lorsque la longueur de cohérence de la source est faible, c'est- à-dire lorsque celle-ci a un spectre large, l'enveloppe du produit d'interférence, qui s'exprime comme la transformée de Fourrier dudit spectre, est courte. Ces points sont d'autant plus rapprochés que la cavité Fabry-Perot est courte. En effet, lorsque la cavité Fabry-Perot est courte, les incréments de distance entre points d'identité de chemins optiques seront proportionnellement plus courts.

A titre d'exemple non limitatif, dans le cas de la première configuration, configuration pour laquelle lesdites modifications opto-géométriques sont dues à une translation du miroir mobile du premier interféromètre, il existe une succession de positions dudit miroir mobile pour lesquelles une interférence optique se produira. Une première interférence se produit entre l'onde transmise n'ayant pas subi de réflexion à l'intérieur de la cavité optique du second interféromètre et l'onde de référence, lorsque celle-ci se propage dans la branche de référence de longueur la plus faible. A l'opposé, une interférence se produit entre l'onde transmise ayant effectué N allers et retours à l'intérieur de la cavité optique et l'onde de référence, lorsque celle-ci se propage dans la branche de référence de longueur la plus élevée.

Un autre exemple est donné dans le cas de la seconde configuration, configuration dans laquelle les modifications opto-géométriques se traduisent par une variation de l'indice de réfraction du milieu optique transducteur constituant la branche de transmission du premier interféromètre.

Les moyens de détection disposés en sortie du dispositif interférométrique détectent un signal modulé de sortie composé d'une succession de produits d'interférence. Chaque produit d'interférence, en fonction de la différence entre trajets optiques dans la branche de référence et la branche de transmission, est une suite de franges de période égale à la moitié de la longueur d'onde centrale de la source dans une enveloppe qui est la transformée de Fourrier de la répartition spectrale de la source lumineuse. Lesdites enveloppes sont, dans l'ordre croissant du chemin optique de la branche de transmission, d'amplitude décroissante.

La mesure porte sur la détermination de la position des différents produits d'interférence associés aux différentes modifications opto-géométriques. La position d'un des produits d'interférence permet de définir une position de référence absolue pouvant être utilisée comme origine d'un axe.

De plus, cette détermination permet l'identification de la grandeur physique ou chimique à l'origine desdites modifications opto-géométriques.

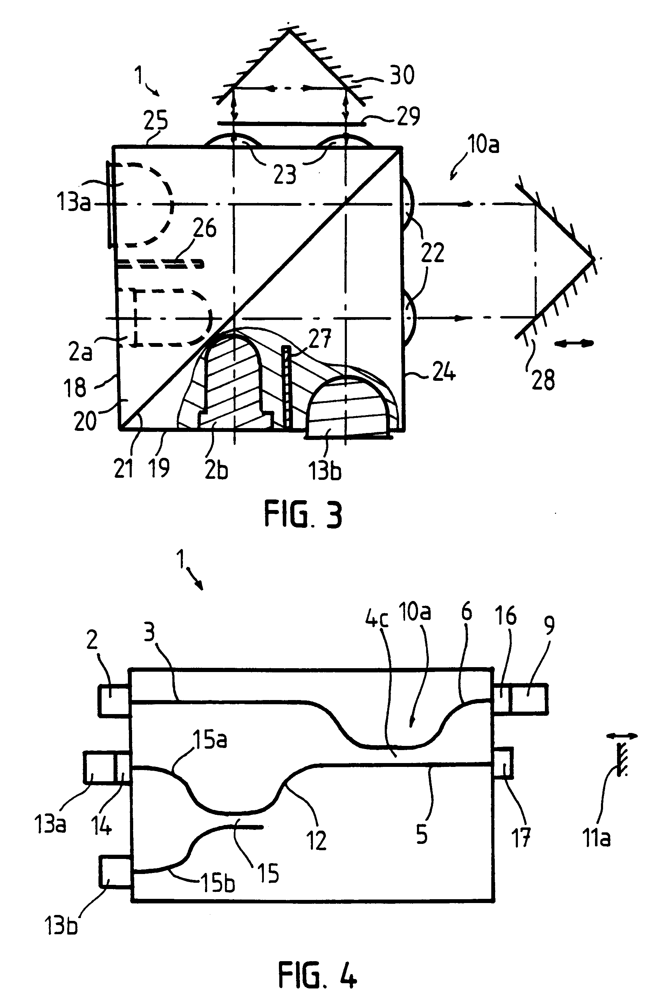

Dans un premier mode de réalisation préféré de l'invention (figure 3) selon la première configuration, le dispositif interférométrique 1 comprend, principalement:
- une première 2a et une seconde 2b sources de lumière;
- un premier 13a et un second 13b récepteurs de lumière;
- un cube séparateur 20;
- des premières 22 et des secondes 23 lentilles collimatrices de lumière et
- un premier 28 et un second 29,30 réflecteurs de lumière.

Les sources de lumière ont des directions principales d'émission perpendiculaires et sont disposés, respectivement, sur une première 18 et une seconde 19 face d'un cube séparateur 20.

Les récepteurs de lumière ont des directions principales de réception perpendiculaires et sont disposés, respectivement, sur ladite première et ladite seconde face dudit cube séparateur.

Lesdites sources et lesdits récepteurs sont donc disposés de manière telle que lesdites directions principales d'émission et de réception forme un angle d'environ 45° avec le plan du miroir semi-transparent 21 du cube séparateur et que les positions des sources et des récepteurs soient symétriques, respectivement, l'un de l'autre par rapport au plan dudit miroir semi-transparent dudit cube séparateur.

Les premières 22 et les secondes 23 lentilles collimatrices de lumière ont des axes perpendiculaires et sont disposées, respectivement, sur les faces 24, 25 du cube séparateur opposées auxdites première et seconde faces dudit cube séparateur.

Le premier 28 réflecteur de lumière, par exemple un prisme réfléchissant, est disposé face à ladite première source et audit premier récepteur de lumière. Le second 29,30 réflecteur de lumière, par exemple un miroir plan semi-tansparent 29 disposé devant un prisme réfléchissant 30 formant un interféromètre du type Fabry-Perot, est disposé face à ladite seconde source et audit second récepteur de lumière. Les ondes émises par lesdites première et seconde sources de lumière sont détectées par lesdits premier et second récepteurs de lumière.

Le dispositif interférométrique peut comprendre des premiers 26 et des seconds 27 moyens obstructeurs de lumière dont les axes sont perpendiculaires, lesdits moyens obstructeurs étant disposés perpendiculairement, respectivement, auxdites première et seconde faces dudit cube séparateur et, respectivement, entre la première source et le premier récepteur et entre la seconde source et le second récepteur. Ces moyens obstructeurs sont, par exemple, un panneau en un matériau absorbant la lumière et permettent à chacun des récepteurs de ne pas être perturbé par les sources adjacentes.

Dans une première variante, les sources sont deux diodes électroluminescentes dont les largeurs spectrales respectives sont trés différentes. Le produit d'interférence issu de la diode de largeur spectrale étroite est plus étalé que le produit issu de la diode de largeur spectrale large.

Dans une seconde variante, les sources sont deux diodes électroluminescentes dont les largeurs spectrales respectives sont distinctes et se chevauchent faiblement. La source de lumière ainsi obtenue a une largeur spectrale correspondant à la somme des largeurs spectrales des diodes. Comme les largeurs spectrales des diodes se chevauchent, le spectre de la source obtenue est continu et s'étend de la longueur d'onde la plus faible à la longueur d'onde la plus élevée. Dans cette seconde variante, l'un des moyens récepteurs est muni d'un filtre interférentiel passe bande étroit et centré sur une longueur d'onde λ₀ du spectre d'une des sources de lumière, préférablement au voisinage du maximum d'émission.

Dans chacune de ces variantes, les moyens récepteurs délivrent, d'une part, un premier signal optique caractérisé par une enveloppe large et, d'autre part, un second signal optique d'enveloppe plus courte, typiquement quelque microns. Le premier signal optique permet d'annoncer la proximité des différents produits d'interférence et ainsi de modifier la vitesse de déplacement du miroir mobile. Le second signal optique permet de déterminer précisément la position du maximum du produit d'interférence.

Un second mode de réalisation préféré du dispositif interférométrique de l'invention fait appel aux techniques de l'optique intégrée. La figure 4 montre le dispositif interférométrique 1 intégré toujours selon la première configuration.

Le dispositif interférométrique est intégré sur un substrat passif en verre. La technologie des échanges ioniques dans les verres, décrite par J.-E. Gortych et al, "Fabrication of planar optical waveguides by K⁺ ion exchange in BK7 glass", Optics Letters/ Vol. 11, No 2 / February 1986, pp. 100 - 102, peut être utilisée. La source de lumière 2 est une diode électroluminescente disposée au bord du substrat. L'onde lumineuse est injectée dans la branche d'amenée 3. Le premier interféromètre 10a se compose d'un coupleur 4c à large bande, encore appelé coupleur 3 dB. La branche de référence 6 débouche sur une première lentille 16 du type Selfoc disposée au bord du substrat et faisant face audit second interféromètre 9 du type Fabry-Perot. La branche de transmission 5 débouche sur une deuxième lentille 17 du type Selfoc disposée au bord du substrat et faisant face audit miroir mobile 11a. La branche de sortie 12 est scindée en deux guides de sortie 15a,15b par l'intermédiaire d'un coupleur multiplexeur 15.

Lesdits deux guides de sortie débouchent sur des moyens de détection, lesquels se composent de deux détecteurs optiques 13a,13b. Une première détection est effectuée par l'intermédiaire d'un filtre interférentiel passe bande étroit 14 et centré sur une longueur d'onde λ₀ du spectre de la source de lumière, préférablement au voisinage du maximum d'émission. On obtient ainsi des produits d'interférence successifs dont l'enveloppe correspond à une source de spectre plus étroit que la source effectivement utilisée, donc de longueur de cohérence plus grande, donc à une enveloppe plus étalée. Ce premier signal optique permet d'annoncer la proximité des différents produits d'interférence et ainsi de modifier la vitesse de déplacement du miroir mobile, dans le but de faciliter une seconde détection. Cette seconde détection est effectuée directement par le second détecteur optique sans l'utilisation d'un filtre interférentiel. On obtient donc un signal optique dont l'enveloppe est assez courte, typiquement de quelque microns. Ce second signal optique permet de déterminer précisément la position du maximum du produit d'interférence.

Le dispositif optique à interférométrie en lumière blanche de l'invention est utilisé dans une première application pour la définition d'au moins une position de référence utilisée comme origine. Les réflecteurs ou le miroir mobile du premier interféromètre est solidaire, par exemple, d'un élément d'une machine outil se déplacant en translation le long d'un axe et dont on veut déterminer la position linéaire par mesure interférométrique en lumière monochromatique selon des méthodes connues.

## Revendications

1. Dispositif optique à interférométrie (1) en lumière blanche comprenant:
- une source de lumière (2);
- des premiers moyens optiques, pour moduler la lumière émise par la source de lumière, constitués d'un premier interféromètre (10a,10b) lequel se compose d'une branche d'amenée (3), d'une branche de référence (6), d'une branche de transmission (5) comportant des moyens (11a,11b) pour modifier les paramètres opto-géométriques dudit premier interféromètre sous l'action d'une grandeur physique ou chimique et d'une branche de sortie (12);
caractérisé en ce que ledit dispositif optique comprend, en outre,
- des seconds moyens, pour produire des interférences successives associées, respectivement, aux différentes modifications des paramètres opto-géométriques dudit premier interféromètre, composés d'un second interféromètre (9) disposé dans la branche de référence dudit premier interféromètre; et
- des moyens de détection (13), pour identifier les différents produits d'interférence associés audites différentes modifications des paramètres opto-géométriques.

2. Dispositif interférométrique selon la revendication 1, caractérisé en ce que:
- le premier interféromètre optique (10a) est un interféromètre du type Michelson dont la branche de référence (6) comporte un miroir fixe (7) et
- le second interféromètre optique (9) est un interféromètre à ondes multiples du type Fabry-Perot, lequel se compose dudit miroir fixe (7) et d'un second miroir optique (8) également fixe.

3. Dispositif interférométrique selon la revendication 1, caractérisé en ce que:
- le premier interféromètre optique (10b) est un interféromètre du type Mach-Zehnder et
- le second interféromètre optique (9) est un interféromètre à onde multiple du type Fabry-Perot, lequel se compose d'un premier (7) et d'un second (8) miroir optique fixes.

4. Dispositif interférométrique selon l'une des revendications 1 et 2, caractérisé en ce que:
- les moyens pour modifier les paramètres opto-géométriques dudit premier interféromètre sont constitués d'un miroir mobile (11a).

5. Dispositif interférométrique selon la revendication 4, caractérisé en ce que le miroir mobile du premier interféromètre optique comporte un support codé pour identifier la position des différents produits d'interférence.

6. Dispositif interférométrique selon l'une des revendications 1 et 3, caractérisé en ce que:
- les moyens pour modifier les paramètres opto-géométriques dudit premier interféromètre sont constitués d'un milieu optique (11b) soumis à la grandeur physique ou chimique.

7. Dispositif interférométrique selon la revendication 6, caractérisé en ce que le milieu optique soumis à la grandeur physique ou chimique est constitué de toutes substances dont l'indice de réfraction varie sous l'action de ladite grandeur.

8. Dispositif interférométrique selon l'une des revendications 1 à 7, caractérisé en ce que les moyens de détection se composent de deux détecteurs (13a,13b) détectant, respectivement:
- les franges de l'interférogramme, par l'intermédiaire d'un filtre centré sur une longueur d'onde du spectre de la source, permettant de définir la proximité de chacun des produits d'interférence et
- la frange de plus grande amplitude de chacun des produits d'interférence, permettant de définir la position de chacun desdits produits d'interférence.

9. Dispositif optique à interférométrie (1) en lumière blanche selon la revendication 8 caractérisé en ce qu'il comprend:
- des premiers (2a) et des seconds (2b) moyens émetteurs de lumière dont les directions principales d'émission sont perpendiculaires, lesdits moyens émetteurs étant disposés, respectivement, sur une première (18) et une seconde (19) face d'un cube séparateur (20) et
- des premiers (13a) et des seconds (13b) moyens récepteurs de lumière dont les directions principales de réception sont perpendiculaires, lesdits moyens récepteurs étant disposés, respectivement, sur lesdites première et seconde faces dudit cube séparateur (20) ;
de manière telle que lesdits moyens émetteurs et lesdits moyens récepteurs soient symétriques, respectivement, les uns des autres par rapport audit plan du miroir semi-transparent;
- des premiers (22) et des seconds (23) moyens collimateurs de lumière dont les axes sont perpendiculaires, lesdits moyens collimateurs étant disposés, respectivement, sur les faces (24, 25) du cube séparateur opposées auxdites première et seconde faces dudit cube séparateur et
- des premiers (28) et des seconds (29,30) moyens réflecteurs de lumière disposés face auxdits premiers et seconds moyens émetteurs et récepteurs de lumière, de manière telle que chacune des ondes émises par lesdits premiers et lesdits seconds moyens émetteurs de lumière soient détectés par lesdits premier et second moyens récepteurs de lumière.

10. Dispositif interférométrique selon la revendication 9, caractérisé en ce qu'il comprend des premiers (26) et des seconds (27) moyens obstructeurs de lumière dont les axes sont perpendiculaires, lesdits moyens obstructeurs étant disposés perpendiculairement, respectivement, auxdites première et seconde faces dudit cube séparateur et, respectivement, entre lesdits premiers moyens émetteurs et récepteurs et lesdits seconds moyens émetteurs et récepteurs.

11. Application du dispositif optique à interférométrie en lumière blanche selon une des revendications 1 à 10 comme système définissant au moins une position linéaire absolue utilisée comme origine d'un axe.

## Claims

1. Optical device for white-light interferometry (1) comprising:
- a light source (2);
- first optical means, for modulating the light emitted by the light source, consisting of a first interferometer (10a, 10b) which is composed of an inlet branch (3), a reference branch (6), a transmission branch (5) including means (11a, 11b) for modifying the optogeometric parameters of the said first interferometer under the action of a physical or chemical quantity, and an outlet branch (12);
characterised in that the said optical device also comprises
- second means, for producing successive interferences associated respectively with the different modifications of the optogeometric parameters of the said first interferometer, composed of a second interferometer (9) disposed in the reference branch of the said first interferometer; and
- detection means (13), for identifying the different interference products associated with the said different modifications of the optogeometric parameters.

2. Interferometer device according to Claim 1, characterised in that:
- the first optical interferometer (10a) is an interferometer of the Michelson type, the reference branch (6) of which includes a fixed mirror (7), and
- the second optical interferometer (9) is a multiple-wave interferometer of the Fabry-Perot type which is composed of the said fixed mirror (7) and a second optical mirror (8), also fixed.

3. Interferometer device according to Claim 1, characterised in that:
- the first optical interferometer (10b) is an interferometer of the Mach-Zehnder type, and
- the second optical interferometer (9) is a multiple-wave interferometer of the Fabry-Perot type, which is composed of first (7) and second (8) fixed optical mirrors.

4. Interferometer device according to one of Claims 1 and 2, characterised in that:
- the means for modifying the optogeometric parameters of the said first interferometer consist of a movable mirror (11a).

5. Interferometer device according to Claim 4, characterised in that the movable mirror of the first optical interferometer has a coded support for identifying the position of the different interference products.

6. Interferometer device according to one of Claims 1 and 3, characterised in that:
- the means for modifying the optogeometric parameters of the said first interferometer consist of an optical medium (11b) subjected to the physical or chemical quantity.

7. Interferometer device according to Claim 6, characterised in that the optical medium subjected to the physical or chemical quantity consists of any substances whose refractive index varies under the action of the said quantity.

8. Interferometer device according to one of Claims 1 to 7, characterised in that the detection means consist of two detectors (13a, 13b) detecting respectively:
- the fringes of the interferogram, by means of a filter centred on a wavelength of the source spectrum, enabling the proximity of each of the interference products to be defined, and
- the highest-amplitude fringe of each of the interference products, enabling the position of each of the said interference products to be defined.

9. Optical device for white-light interferometry (1) according to Claim 8, characterised in that it comprises:
- first (2a) and second (2b) light-emitting means, the principal emission directions of which are perpendicular, the said emitting means being disposed respectively on a first (18) and second (19) face of a separator cube (20), and
- first (13a) and second (13b) light-receiving means, the principal receiving directions of which are perpendicular, the said receiving means being disposed respectively on the said first and second faces of the said separator cube (20);
so that the said emitting means and the said receiving means are symmetrical, respectively, with each other with respect to the said plane of the semi-transparent mirror;
- first (22) and second (23) light-collimating means, the axes of which are perpendicular, the said collimating means being disposed respectively on the faces (24, 25) of the separator cube opposite the said first and second faces of the said separator cube, and
- first (28) and second (29, 30) light-reflecting means disposed facing the said first and second light emitting and receiving means, so that each of the waves emitted by the said first and the said second light-emitting means are detected by the said first and second light-receiving means.

10. Interferometer device according to Claim 9, characterised in that it comprises first (26) and second (27) light-obstructing means, the axes of which are perpendicular, the said obstructing means being disposed perpendicularly, respectively, to the said first and second faces of the said separator cube and, respectively, between the said first emitting and receiving means and the said second emitting and receiving means.

11. Application of the optical device for white-light interferometry according to one of Claims 1 to 10 as a system defining at least one absolute linear position used as the origin of an axis.

## Patentansprüche

1. Optisches Gerät (1) fur Weißlichtinterferometrie, umfassend
- eine Lichtquelle (2)
- erste optische Mittel zum Modulieren des von der Lichtquelle emittierten Lichts, gebildet aus einem ersten Interferometer (10a,10b), das sich aus einem Zuführzweig (3), einem Bezugszweig (6), einem Durchlaßzweig (5), der Mittel (11a, 11b) zum Modifizieren der optogeometrischen Parameter besagten ersten Interferometers unter der Wirkung einer physikalischen oder chemischen Größe umfaßt, und einem Ausgangszweig (12) zusammensetzt;
dadurch gekennzeichnet, daß besagtes optisches Gerät zudem
- zweite Mittel zum Erzeugen von aufeinanderfolgenden Interferenzen, die entsprechend zu anderen Modifikationen der optogeometrischen Parameter als die des besagten ersten Interferometers gehören, umfassend ein zweites Interferometer (9), das in dem Bezugszweig besagten ersten Interferometers angeordnet ist; und
- Detektionsmittel (13) zum Identifizieren der verschiedenen Interferenzprodukte, die zu besagten verschiedenen Modifikationen von optogeometrischen Parametern gehören,
umfaßt.

2. Interferometrisches Gerät gemäß Anspruch 1, dadurch gekennzeichnet, daß
- das erste optische Interferometer (10a) ein Michelson-Interferometer ist, dessen Bezugszweig (6) einen feststehenden Spiegel (7) umfaßt, und
- das zweite optische Interferometer (9) ein Vielstrahl-Fabry-Perot-Interferometer ist, das sich aus besagtem feststehenden Spiegel (7) und einem zweiten ebenfalls feststehenden optischen Spiegel (8) zusammensetzt.

3. Interferometrisches Gerät gemäß Anspruch 1, dadurch gekennzeichnet, daß
- das erste optische Interferometer (10a) ein Mach-Zehnder-Interferometer ist, und
- das zweite optische Interferometer (9) ein ein Vielstrahl-Fabry-Perot-Interferometer ist, das sich aus einem feststehenden optischen Spiegel (7) und einem zweiten feststehenden optischen Spiegel (8) zusammensetzt.

4. Interferometrisches Gerät gemäß einem der Ansprüche 1 und 2, dadurch gekennzeichnet, daß
- die Mittel zum Modifizieren der optogeometrischen Parameter besagten ersten Interferometers aus einem beweglichen Spiegel (11a) gebildet werden.

5. Interferometrisches Gerät gemäß Anspruch 4, dadurch gekennzeichnet, daß der bewegliche Spiegel des ersten optischen Interferometers einen Träger umfaßt, der zum Identifizieren der Position der verschiedenen Interferenzprodukte kodiert ist.

6. Interferometrisches Gerät gemäß einem der Ansprüche 1 und 2, dadurch gekennzeichnet, daß
- die Mittel zum Modifizieren der optogeometrischen Parameter besagten ersten Interferometers aus einem optischen Milieu (11b) gebildet werden, das der physikalischen oder chemischen Größe unterliegt.

7. Interferometrisches Gerät gemäß Anspruch 6, dadurch gekennzeichnet, daß das optische Milieu, das der physikalischen oder chemischen Größe unterliegt, durch jedwede Substanzen gebildet wird, deren Brechnungsindex unter der Wirkung dieser Größe variiert.

8. Interferometrisches Gerät gemäß einem der Ansprüche 1 bis 7, dadurch gekennzeichnet, daß sich die Detektionsmittel aus zwei Detektoren (13a,13b) zusammensetzen, die entsprechend
- die Interferenzstreifen unter Zwischenschaltung eines auf eine Wellenlänge der Quelle zentrierten Filters zum Ermöglichen des Definierens der Nähe jedes Interenzprodukts und
- den Interferenzstreifen mit der größten Amplitude jedes Interferenzprodukts zum Ermöglichen des Definierens der Position jedes der besagten Interferenzprodukte
detektieren.

9. Optisches Gerät (1) für Weißlichtinterferometrie gemäß Anspruch 8, dadurch gekennzeichnet, daß es
- erste (2a) und zweite (2b) Lichtemissionsmittel, deren Hauptemissionsrichtungen senkrecht zueinander sind, wobei besagte Emissionsmittel auf einer ersten (18) und einer zweiten (19) Seite eines Trennkubus (20) angeordnet sind, und
- erste (13a) und zweite (13b) Lichtempfangsmittel, deren Hauptempfangsrichtungen senkrecht zueinander sind, wobei besagte Empfangsmittel entsprechend auf besagten ersten und zweiten Seiten des besagten Trennkubus (20) angeordnet sind,
derart, daß besagte Emissionsmittel und besagte Empfangsmittel entsprechend zueinander symmetrisch in bezug auf besagte Ebene des halbdurchlässigen Spiegels sind,
- erste (22) und zweite (23) Lichtkollimationsmittel, deren Achsen senkrecht zueinander sind, wobei besagte Kollimationsmitel entsprechend auf den Seiten (24, 25) des Trennkubus angeordnet sind, die besagten ersten und zweiten Seiten des besagten Trennkubus gegenüberliegen, und
- erste (28) und zweite (29,30) Lichtreflektionsmittel umfaßt, die gegenüber von besagten ersten und zweiten Lichtemissions- und -empfangsmitteln derart angeordnet sind, daß jeder der von besagten ersten und besagten zweiten Lichtemissionsmitteln durch besagte erste und zweite Lichtempfangsmittel detektiert werden.

10. Interferometrisches Gerät gemäß Anspruch 9, dadurch gekennzeichnet, daß es erste (26) und zweite (27) Lichtsperrmittel umfaßt, deren Achsen senkrecht zueinander sind, wobei besagte Sperrmittel senkrecht zu besagten ersten bzw. zweiten Flächen des besagten Trennkubus und zwischen besagten ersten Emissions- und Empfangsmitteln bzw. besagten zweiten Emissions- und Empfangsmitteln angeordnet sind.

11. Anwendung des optischen Geräts zur Weißlichtinterferometrie gemäß einem der Ansprüche 1 bis 10 als System, das wenigstens eine absolute lineare Position als Ursprung einer Achse definiert.
